# DEMANDE DE BREVET EUROPEEN

(11) **EP 1 149 732 A1**
(43) Date de publication de la demande: **31.10.2001**
(21) Numéro de dépôt: 01401008.6
(22) Date de dépôt: 19.04.2001
(51) Int. Cl.: B60Q 1/26

(54) **Feu de signalisation de véhicule**

(30) Priorité: 26.04.2000 FR 0005308
(71) Demandeur: COMPAGNIE D'EQUIPEMENTS AUTOMOBILES AXO SCINTEX, F-91300 Villemoisson-sur-Orge (FR)
(72) Inventeur: Buisson, Alain, 78320 Le Mesnil Saint-Denis (FR)
(74) Mandataire: Faber, Jean-Paul

(57) **Abrégé**

Feu de signalisation de véhicule du type comprenant, au moins, un compartiment (5) avec un réflecteur (7) et dans lequel sont logés une lampe (8), un écran optique (10) et un écran intermédiaire (1) interposé entre l'écran optique (10) et une glace extérieure (14), caractérisé en ce que l'écran intermédiaire (1) est, sur sa face tournée vers l'écran optique, métallisé, tandis que sur son autre face, il est coloré, ledit écran intermédiaire présentant une série d'ouvertures (12), tandis que l'écran optique (10) comporte une optique propre à canaliser les rayons lumineux issus de la lampe à travers les ouvertures (12).

## Description

La présente invention vise un feu de signalisation de véhicule automobile.

L'invention se rapporte à un feu arrière de préférence, mais peut également constituer un feu avant.

Les feux actuellement comportent différents compartiments avec des réflecteurs et dans lesquels sont disposées des lampes et une glace masquant l'ensemble. Comme les feux correspondent à différentes fonctions avec des couleurs différentes, les feux présentent généralement une partie dite cristal pour le recul, une partie orangée pour le changement de direction ou le feu de recul et une partie rouge pour le stop et l'éclairage arrière.

La technique antérieure connaît un brevet allemand n° 42 28 892 et un brevet français n° 2 427 549.

Le brevet allemand décrit un feu comprenant une lampe disposée dans un réflecteur, un écran optique, un écran présentant des zones perméables à la lumière et des zones opaques et une glace extérieure. L'écran présentant des zones perméables à la lumière et des zones opaques comporte, sur sa face tournée vers la glace, des zones métallisées constituant les zones opaques, ledit écran étant concave, la concavité étant tournée vers la glace.

Grâce à une telle disposition, le feu offre une certaine profondeur et on évite "la lumière fantôme", c'est-à-dire de donner l'impression que le feu est allumé lorsqu'il est éteint, mais qu'il reçoit la lumière du jour.

Le brevet français n° 2 427 549 vise un feu de véhicule et vise également le même but que le brevet allemand c'est-à-dire d'éviter que la lumière incidente du jour se réfléchisse dans le feu et qu'ainsi on ait l'impression que le feu est allumé. Pour parvenir à ce résultat, le feu décrit dans ce brevet comprend un réflecteur, une lampe disposée dans le réflecteur, une glace extérieure et un écran intermédiaire disposé entre le réflecteur et la glace et dont la face tournée vers la glace est métallisée, la surface métallisée présentant des fentes, tandis que l'autre face forme une optique canalisant les rayons lumineux à travers les fentes.

L'invention, par rapport à ces brevets, répond au but non pas de supprimer l'aspect de feu allumé lorsqu'il ne l'est pas, mais de réaliser un feu qui, en répondant aux impératifs de la réglementation, c'est-à-dire présentant :
a) une partie cristal pour le recul ;
b) une partie orangée pour le changement de direction ;
c) une partie rouge pour l'éclairage arrière et le stop,
ait un aspect général uniforme de même couleur lorsque le feu est éteint ce qui ne correspond pas à la technique antérieure.

Le feu de signalisation, objet de l'invention, est du type comprenant au moins un compartiment avec un réflecteur et dans lequel sont logés une lampe, un écran optique et un écran intermédiaire interposé entre l'écran optique et une glace extérieure, l'écran intermédiaire étant opaque et d'une couleur uniforme et présentant une série d'ouvertures, tandis que l'écran optique comporte une optique propre à canaliser les rayons lumineux issus de la lampe à travers les ouvertures, ledit feu étant caractérisé en ce que l'écran intermédiaire, sur sa face tournée vers la glace, est coloré, l'autre face ayant un aspect métallisé.

Grâce à cette disposition, on peut réaliser un feu qui a une couleur uniforme mais qui présente, néanmoins, les différentes fonctions réglementaires, ledit feu ayant une couleur très brillante, vu de l'extérieur.

Afin que, lorsque le feu est allumé, celui-ci présente un éclairage uniforme, la face de la glace, tournée vers les ouvertures de l'écran, est pourvue d'une optique apte à faire diverger vers l'extérieur les rayons lumineux issus de la lampe.

On peut prévoir, inséré entre l'écran optique et la lampe, un écran à échelons de Fresnel.

Suivant une variante de réalisation, l'écran optique est à degrés et présente, à chaque degré, des lentilles aptes à canaliser les rayons lumineux issus de la lampe vers les ouvertures de l'écran.

Dans la variante, avec un écran optique à degrés, on peut également prévoir sur la glace une optique afin de faire diverger, vers l'extérieur, les rayons lumineux issus de la lampe.

Suivant encore une autre réalisation, l'écran est prolongé en dehors de l'écran optique par une partie présentant une succession de logements dans lesquels s'étendent des diodes électroluminescentes.

On peut également prévoir que la glace présente, au droit des diodes, une optique apte à faire diverger les rayons lumineux émis par lesdites diodes.

L'invention va maintenant être décrite avec plus de détails en se référant à des modes de réalisation particuliers donnés à titre d'exemple seulement et représentés aux dessins annexés, dans lesquels :
Figure 1 est une vue schématique montrant, vu de face, un feu arrière de véhicule.
Figure 2 est une vue en coupe suivant la ligne 2-2 de la figure 1.
Figure 3 est une vue en coupe suivant la ligne 3-3 de la figure 1.
Figure 4 est une vue en coupe d'une variante de réalisation.
Figure 5 est une vue en coupe d'encore un autre mode de réalisation.

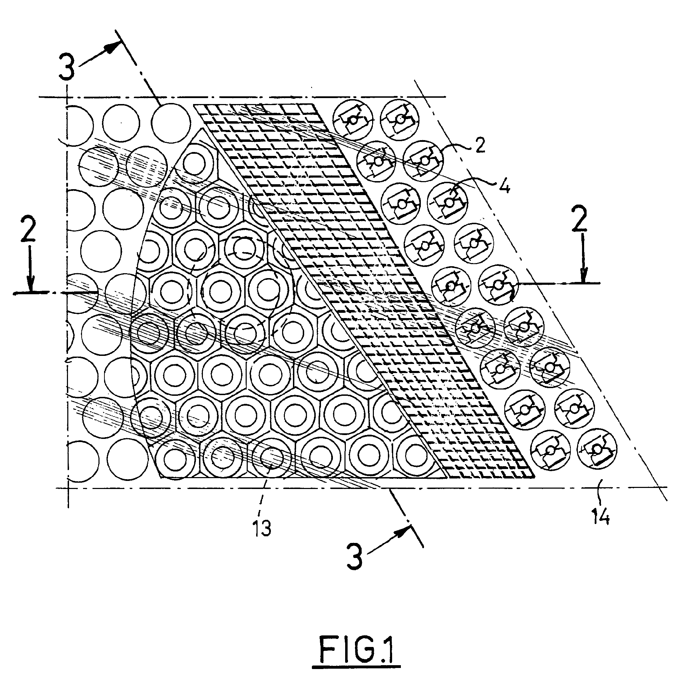

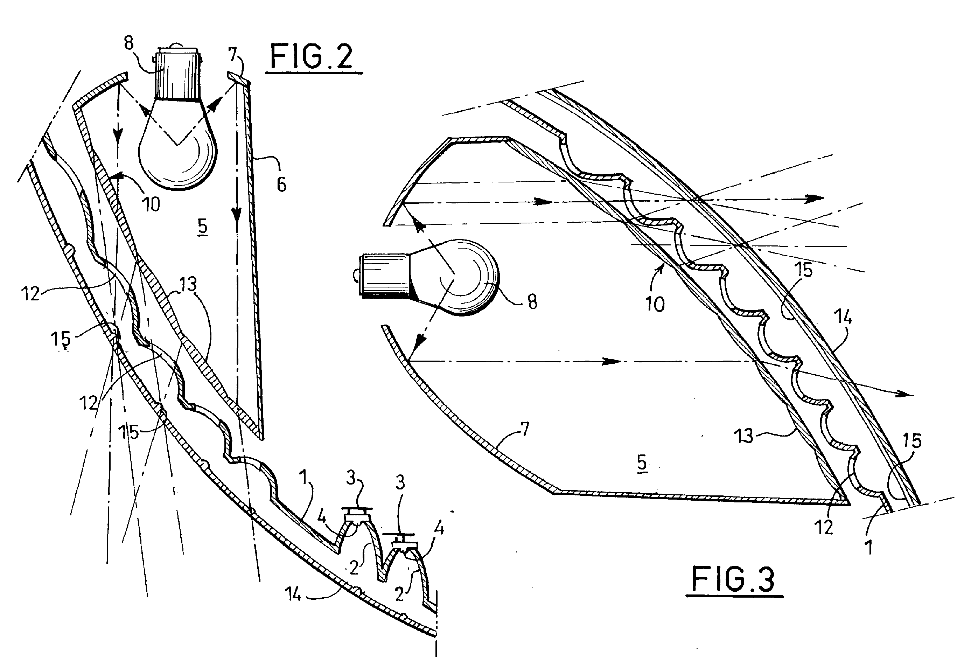

Dans le mode de réalisation des figures 1 à 3, on a représenté schématiquement un feu arrière de véhicule qui comprend un écran intermédiaire 1 dont une partie est conformée pour présenter une série de logements 2 sur lesquels sont montés des circuits imprimés 3 supportant des diodes électroluminescentes 4.

Dans ce mode de réalisation, les diodes correspondent à la fonction feu de position (feu arrière) et sont rouges.

Le reste du feu est aménagé de façon traditionnelle avec des compartiments correspondant aux différentes fonctions. Dans ce mode de réalisation, on a supposé qu'un compartiment 5 correspondait à la fonction stop et il est délimité par une cloison 6 avec un réflecteur 7 au centre duquel s'étend une lampe 8.

En regard du compartiment 5 de la lampe 8 est disposé un écran optique 10, cet écran optique étant, par exemple, couleur ambre, la lampe 8 étant blanche ; également l'écran optique 10 peut être incolore, la lampe étant ambre.

L'écran 1 est prolongé en regard de l'écran optique 10 et présente une conformation rappelant l'aspect qu'il présente dans les endroits garnis de diodes.

Dans la partie de l'écran 1 située en regard de l'écran optique 10, ledit écran est opaque et comporte une série d'ouvertures 12, tandis que l'écran optique 10 comporte des lentilles 13 disposées pour concentrer les rayons lumineux émis par la lampe 8 dans les ouvertures 12. L'écran 10, sur sa face tournée vers l'écran optique 10, est métallisé, tandis que l'autre face est colorée.

L'ensemble est fermé par une glace 14 qui, dans cet exemple, est incolore, ladite glace, dans sa partie située au droit des ouvertures 12, comporte une optique 15 apte à faire diverger les rayons émis par la lampe 8.

Dans ce mode de réalisation, on a supposé que la glace 14 est incolore et vu de l'extérieur, le feu a un aspect coloré continu. Le feu, malgré cet aspect, peut néanmoins, lors de l'allumage des différentes sources lumineuses, lampes ou diodes, présenter les différentes fonctions réglementaires, soit rouge pour le stop et l'éclairage arrière, le feu de position et le feu arrière de brouillard, ambre pour le changement de direction et incolore pour le feu de recul.

L'écran 1, sur sa face tournée vers la glace 14 peut être rouge, et ainsi, vu de l'extérieur, le feu aura un aspect rouge brillant lorsque le feu est éteint et pourra néanmoins présenter les différentes fonctions réglementaires. Dans ce cas, la glace 14 sera incolore, l'écran optique 10 étant, pour la fonction changement de direction, ambre ou incolore, la lampe étant ambre, le feu de recul étant incolore.

On peut également prévoir, c'est-à-dire avec un écran intermédiaire rouge avec un fond argenté, que la glace 14 est rose, la fonction feu de recul étant réalisée avec une lampe incolore et un écran optique bleu, tandis que la fonction changement de direction est obtenue avec une lampe blanche et un écran optique vert. Bien entendu, la coloration réglementaire peut être obtenue par des bonnettes disposées devant les lampes et présentant les colorations désirées.

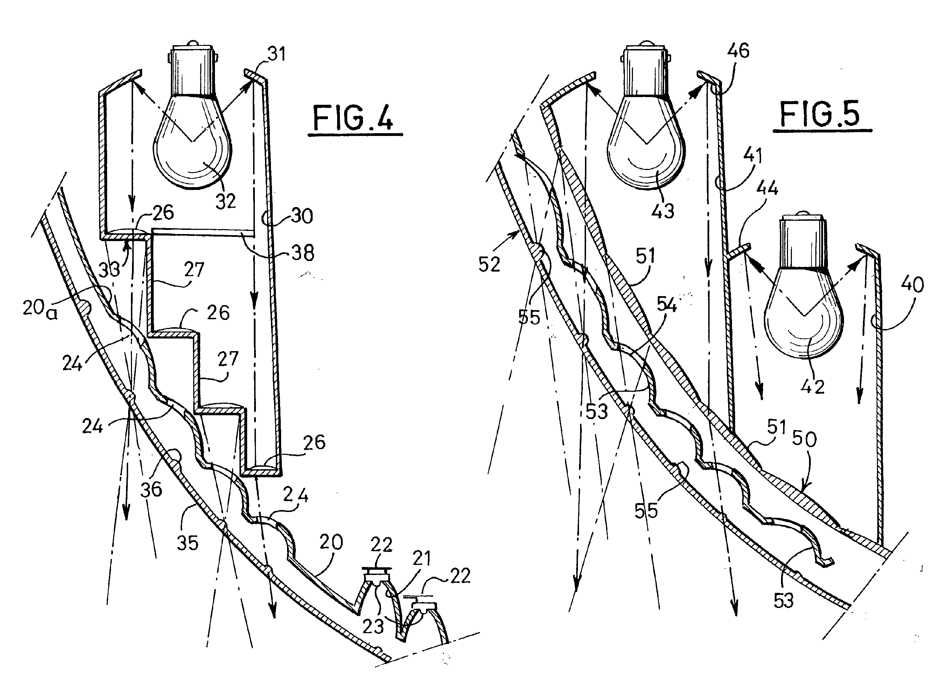

La figure 4 montre une variante de réalisation qui comprend un écran 20 qui, comme dans la réalisation précédente, est métallisé sur la face arrière, la face avant étant colorée par exemple en rouge. L'écran 20 présente des logements 21 sur lesquels sont montés des circuits imprimés 22 supportant des diodes électroluminescentes 23. Ces logements 21 constituent des réflecteurs.

L'écran 20 est prolongé par une partie 20a présentant des ouvertures 24. En regard de cette partie 20a s'étend un compartiment 30 avec un réflecteur 31 et dans lequel s'étend une lampe 32, le compartiment présentant un écran optique 33 formé de degrés 27 pourvus de lentilles 26. Les lentilles 26 permettent de faire converger les rayons lumineux vers une glace 35 qui comporte une optique 36 pour faire diverger les rayons lumineux issus de la lampe 32.

Il peut être prévu un écran à échelons de Fresnel 38, celui-ci, de préférence incolore, permettant une certaine concentration de la lumière.

On peut prévoir la même optique 36 au droit des diodes 23.

Le feu présente, lorsque les lampes et les diodes sont éteintes, une teinte uniforme rouge et si on suppose que le compartiment 30 correspond au feu de changement de direction, l'écran optique 33 est ambre, si la lampe 32 est blanche et incolore si la lampe est de couleur ambre. Comme dans l'exemple précédent, on peut réaliser les différentes combinaisons de couleur pour obtenir les couleurs réglementaires.

La figure 5 montre en coupe une variante de réalisation de l'invention. Dans cette réalisation, le feu comporte une série de compartiments 40, 41 dans chacun desquels s'étend une lampe 42, 43 correspondant aux différentes fonctions, feu arrière, feu de recul, stop, feu de changement de direction, feu antibrouillard. Ici, on a représenté seulement deux compartiments, l'un correspondant, par exemple, au feu arrière 40, tandis que l'autre 41 correspond au changement de direction.

Le compartiment 40 comporte un réflecteur 44 destiné à diriger les rayons lumineux émis par la lampe 42 vers un écran optique 50.

Le compartiment 41 présente un réflecteur 46 dirigeant les rayons lumineux émis par la lampe 43 vers l'écran optique 50.

L'écran optique 50 est du même type que celui des figures 1 à 3 et comporte une série de lentilles 51.

Entre une glace extérieure 52 et l'écran optique 50 s'étend un écran 53 qui comporte une série d'ouvertures 54, les rayons lumineux étant canalisés par les lentilles 51 vers les ouvertures 54, tandis que la glace 52 comporte une optique 55 apte à diffuser lesdits rayons lumineux.

L'écran 53 est coloré sur sa face tournée vers la glace 52, l'autre face étant métallisée. Dans ce cas le feu vu de l'extérieur, les lampes étant éteintes, a un aspect général coloré très brillant.

Bien entendu, l'invention n'est pas limitée aux modes de réalisation qui viennent d'être décrits et représentés. On pourra y apporter de nombreuses modifications de détail sans sortir pour cela du cadre de l'invention.

## Revendications

1. Feu de signalisation de véhicule du type comprenant, au moins, un compartiment (5) avec un réflecteur (7) et dans lequel sont logés une lampe (8), un écran optique (10) et un écran intermédiaire (1) interposé entre l'écran optique (10) et une glace extérieure (14), l'écran intermédiaire (1) étant opaque et d'une couleur uniforme et présentant une série d'ouvertures (12), tandis que l'écran optique (10) comporte une optique propre à canaliser les rayons lumineux issus de la lampe à travers les ouvertures (12), **caractérisé en ce que** la face de l'écran intermédiaire (1), tournée vers la glace (14), est colorée, tandis que l'autre face a un aspect métallisé.

2. Feu de signalisation de véhicule, selon la revendication 1, **caractérisé en ce que** la face de l'écran intermédiaire (1), tournée vers la glace (14) est rouge.

3. Feu de signalisation de véhicule, selon la revendication 1, **caractérisé en ce que** la face de la glace (14), tournée vers les ouvertures (12) de l'écran, est pourvue d'une optique apte à faire diverger vers l'extérieur les rayons lumineux issus de la lampe.

4. Feu de signalisation de véhicule, selon la revendication 1, **caractérisé en ce que** l'écran optique (33) est à degrés et présente, à chaque degré, des lentilles (26) aptes à canaliser les rayons lumineux issus de la lampe (32) vers les ouvertures (26) de l'écran (20).

5. Feu de signalisation de véhicule, selon la revendication 4, **caractérisé en ce que**, entre l'écran optique et la lampe, est inséré un écran à échelons de Fresnel.

6. Feu de signalisation de véhicule, selon la revendication 4, **caractérisé en ce que** la glace (35) comporte une optique (36) apte à faire diverger, vers l'extérieur, les rayons lumineux issus de la lampe (32).

7. Feu de signalisation de véhicule, selon la revendication 1, **caractérisé en ce que** l'écran (1, 20) est prolongé en dehors de l'écran optique par une partie présentant une succession de logements (2, 21) dans lesquels s'étendent des diodes électroluminescentes (4, 23).

8. Feu de signalisation de véhicule, selon la revendication 7, **caractérisé en ce que** la glace (14) présente, au droit des diodes, une optique (15) apte à faire diverger les rayons lumineux émis par lesdites diodes.
